# EUROPEAN PATENT SPECIFICATION

(11) **EP 4 266 500 B1**
(45) Date of publication and mention of the grant of the patent: **03.09.2025**
(21) Application number: 22919270.3
(22) Date of filing: 22.12.2022
(51) Int. Cl.: H01Q 21/00, H01Q 3/28, H01Q 1/50, H01Q 1/24, H01Q 3/34, H04B 1/04

(54) **MILLIMETER WAVE MODULE CIRCUIT AND TERMINAL DEVICE**
MILLIMETERWELLENMODULSCHALTUNG UND ENDGERÄTEVORRICHTUNG
CIRCUIT DE MODULE À ONDES MILLIMÉTRIQUES ET DISPOSITIF TERMINAL

(30) Priority: 12.01.2022 CN 202210031486
(43) Date of publication of application: 25.10.2023
(73) Proprietor: Honor Device Co., Ltd., Shenzhen, Guangdong 518040 (CN)
(72) Inventor: Jiang, Cheng, Shenzhen, Guangdong 518040 (CN); Wang, Yu, Shenzhen, Guangdong 518040 (CN); Qu, Zengchao, Shenzhen, Guangdong 518040 (CN); Pen, Tianyu, Shenzhen, Guangdong 518040 (CN); Liu, Dongping, Shenzhen, Guangdong 518040 (CN)
(74) Representative: Beder, Jens
(86) International application number: PCT/CN2022/141111
(87) International publication number: WO 2023/134421

(56) References cited:
- WO-A1-2020/231618
- CN-A- 102 884 731
- CN-A- 113 037 315
- CN-A- 114 447 626
- CN-U- 210 666 063
- US-A1- 2011 241 969
- US-A1- 2019 267 710

## Description

This application claims priority to Chinese Patent Application CN 114 447 626 A (Application No. 202210031486.X), filed with the China National Intellectual Property Administration on January 12, 2022, and entitled "MILLIMETER WAVE MODULE CIRCUIT AND TERMINAL DEVICE".

### TECHNICAL FIELD

Embodiments of this application relate to the field of terminal technologies, and in particular to a millimeter wave module circuit and a terminal device.

### BACKGROUND

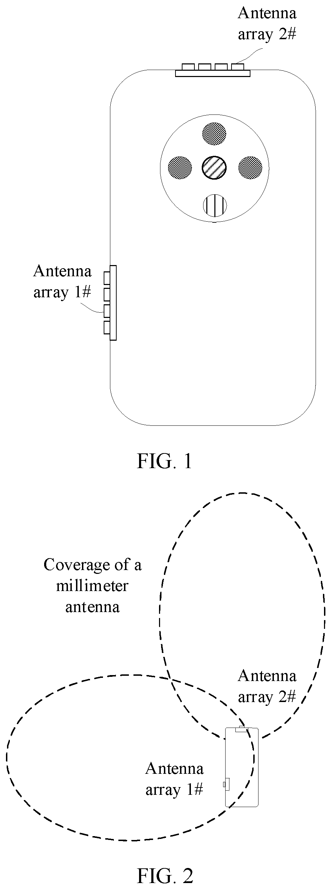

A millimeter wave antenna module, referred to as a "millimeter wave module circuit", is a component that includes a millimeter wave radio frequency (Radio Frequency, RF) front end and an antenna array. Because a millimeter wave attenuates greatly during radiation, a coverage of millimeter wave radiation is usually small. To expand the coverage of the millimeter wave radiation, a plurality of antenna arrays are usually disposed on a terminal device in different directions. Therefore, as shown in FIG. 1, coverages of the millimeter wave radiation may be superimposed on each other in different directions, and the coverages of the millimeter wave radiation are expanded. Usually, quantities of antennas in a plurality of antenna arrays disposed in different directions are the same.

However, because an increasing quantity of electronic components are integrated on the terminal device, an area of a region in which an antenna array is disposed on the terminal device is getting increasingly small. This enables a quantity of antennas included in the antenna array disposed in the region to be reduced and further causes a quantity of antennas included in some antenna arrays in the millimeter wave module circuit to be less than a quantity of antennas in other antenna arrays. A gain of an antenna array is usually related to a quantity of antennas included in the antenna array. As the quantity of antennas is reduced, the gain of an antenna array decreases. This causes performance of the millimeter wave module circuit to be deteriorated in a region covered by the antenna array.

Based on this, how to improve the performance of the millimeter wave module circuit has become a problem to be resolved urgently.

CN 210 666 063 U discloses a test circuit comprising a control key area, a power supply chip module, a main control chip area, an output control area and a display indication area. The control key area responds to a switching signal generated by a switching operation of a user and sends the switching signal to the main control chip area. The main control chip area is used for receiving a switching signal and sending a control signal to the output control area in response to the received switching signal. The output control area is used for receiving the control signal and switching an antenna channel in the antenna unit in response to the received control signal. The power supply chip area is used for supplying power to the test circuit and the detected antenna unit, and the display indication area is used for displaying the communication state of the antenna channel in the antenna unit.

### SUMMARY

To solve the problem of improving the performance of the millimeter wave module circuit, embodiments of this application provide a millimeter wave module circuit and an electronic device according to the enclosed independent claim. Advantageous features of the present invention are defined in the corresponding subclaims. In the following, parts of the description and drawings referring to embodiments, which are not covered by the claims, are not presented as embodiments of the invention but as examples useful for understanding the invention.

### BRIEF DESCRIPTION OF DRAWINGS

FIG. 1 is a schematic diagram of a structure of an electronic device;
FIG. 2 is a schematic diagram of a radiation coverage of a millimeter wave module circuit;
FIG. 3 is a schematic diagram of a structure of an electronic device;
FIG. 4 is a schematic diagram of a radiation coverage of a millimeter wave module circuit;
FIG. 5 is a schematic diagram of a structure of a millimeter wave module circuit according to an embodiment of this application;
FIG. 6 is a schematic diagram of flow paths of a second signal, a third signal, and a fourth signal according to an embodiment of this application;
FIG. 7 is a schematic diagram of synthesizing a second signal by using a third signal and a fourth signal according to an embodiment of this application;
FIG. 8 is a schematic diagram of a structure of a millimeter wave module circuit according to another embodiment of this application;
FIG. 9 is a schematic diagram of a signal flow path when a switch is in a first switch-on state according to an embodiment of this application;
FIG. 10 is a schematic diagram of a signal flow path when a switch is in a second switch-on state according to an embodiment of this application;
FIG. 11 is a schematic diagram of a structure of an electronic device according to an embodiment of this application;
FIG. 12 is a schematic diagram of a positional relationship of three antenna arrays according to an embodiment of this application;
FIG. 13 is a schematic diagram of a positional relationship of three antenna arrays according to another embodiment of this application; and
FIG. 14 is a schematic diagram of a positional relationship of three antenna arrays according to another embodiment of this application.

### DESCRIPTION OF EMBODIMENTS

The following clearly describes technical solutions in embodiments of this application in detail with reference to accompanying drawings. In descriptions of embodiments of this application, unless otherwise specified, "/" indicates "or". For example, A/B may indicate A or B. The term "and/or" in this specification describes only an association relationship for describing associated objects, and indicates that three relationships may exist. For example, A and/or B may indicate the following three cases: Only A exists, both A and B exist, and only B exists. In addition, in the descriptions of embodiments of this application, "a plurality of" means two or more.

In the following, the terms "first" and "second" are used merely for descriptive purposes, and cannot be understood as indicating or implying relative importance or implicitly indicating a quantity of indicated technical features. Therefore, a feature limited by "first" or "second" may explicitly or implicitly include one or more features. In the descriptions of embodiments of this application, unless otherwise specified, "a plurality of" means two or more than two.

Before technical solutions of embodiments of this application are described, technical scenarios and technical terms in this application are introduced first.

The technical solutions of this application relate to the field of antenna technologies, and in particular to a millimeter wave antenna circuit. The circuit may be used in an electronic device. Further, the electronic device may be a terminal device (referred to as a terminal). The terminal may be a device that provides a service and/or data connectivity to a user, a handheld device with a wireless connection function, or another processing device connected to a wireless modem, such as a wireless terminal, a vehicle-mounted wireless terminal, a portable device, a wearable device, a mobile phone (or referred to as a "cellular" phone), a portable terminal, a pocket-sized terminal, a handheld terminal, or the like, which exchanges a language and/or data with a wireless access network. For example, the terminal may be a device such as a personal communication service (personal communication service, PCS) phone, a cordless telephone set, a session initiation protocol (SIP) phone, a wireless local loop (wireless local loop, WLL) station, a personal digital assistant (personal digital assistant, PDA), or the like. The wireless terminal may alternatively be a subscriber unit (subscriber unit), a mobile station (mobile station), a mobile station (mobile), a remote terminal (remote terminal), an access terminal (access terminal), a user terminal (user terminal), a user agent (user agent), a user device (user device), or user equipment (user equipment, UE). A type of the terminal device is not limited in this application.

FIG. 1 provides a schematic diagram of a structure of a terminal device. A millimeter wave module circuit on the terminal device includes two antenna arrays, namely, an antenna array 1# and an antenna array 2#. The two antenna arrays are disposed on different planes of the terminal device respectively. Each antenna array has a beam coverage.

As shown in FIG. 2, a millimeter wave beam radiated by each antenna array is a unidirectional and forward beam. A working mechanism of the two antenna arrays: Only either of the antenna array 1# or the antenna array 2# may be selected simultaneously for communication. Therefore, an effect of antenna coverage of an entire terminal device is simple superposition of antenna arrays in a millimeter wave radiation direction, and an effect diagram of coverage of millimeter wave beams for the entire terminal device is shown in FIG. 2.

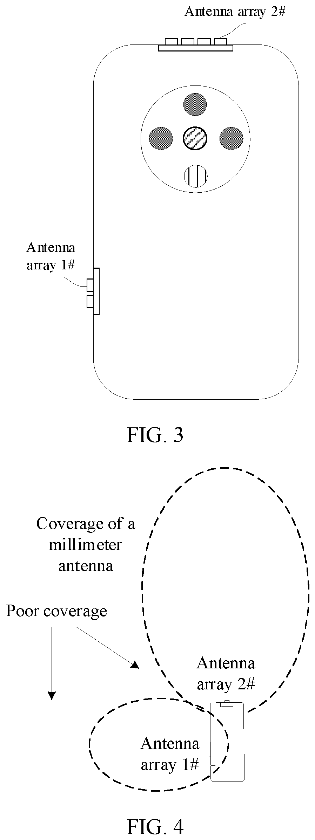

At present, as an increasing quantity of electronic components are integrated on the terminal device, an area of a region in which an antenna array is disposed on the terminal device is getting increasingly small. In a possible case, when an available area of a region in which an antenna array is disposed on the terminal device is small, a plurality of antennas cannot be disposed in the region, and further, a quantity of antennas in one antenna array is less than a quantity of antennas in another antenna array. It should be understood that as a quantity of antennas is increased, a gain of the antennas is high, and a beam of a corresponding antenna array is large. When a quantity of antennas in one antenna array is less than a quantity of antennas in another antenna array, it indicates that a beam of the antenna array is short. For example, as shown in FIG. 3, a quantity of antennas in an antenna array 1# is small. This leads to a short radiation beam corresponding to the antenna array 1#. As shown in FIG. 4, this enables a coverage of a terminal device in a direction of the antenna array 1# to be small.

In view of this, this application provides a millimeter wave module circuit. The millimeter wave module circuit can increase a coverage of an antenna array with a small quantity of antennas, improving performance of the terminal device.

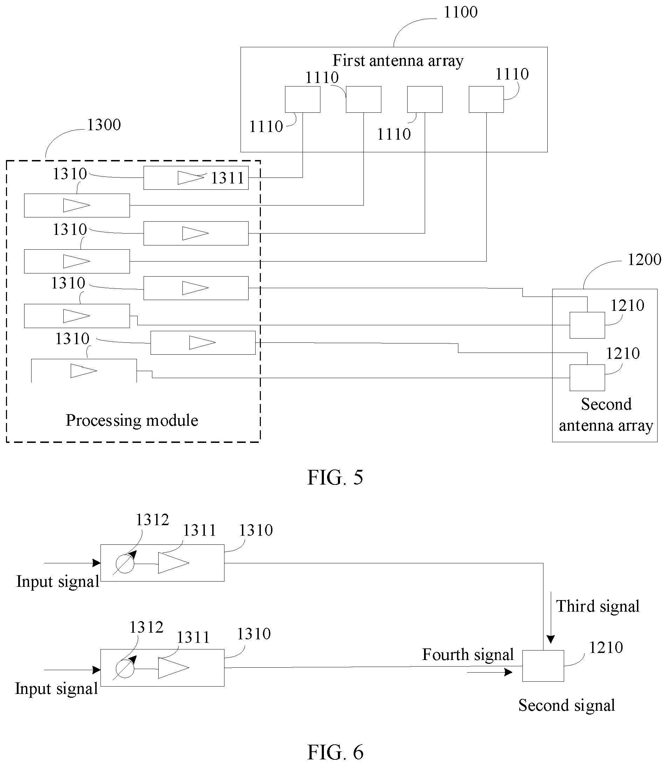

Details are described below with reference to embodiments shown in FIG. 5 to FIG. 10.

FIG. 5 is a schematic diagram of a structure of a millimeter wave module circuit according to an embodiment of this application. As shown in FIG. 5, the millimeter wave module circuit includes a first antenna array 1100, a second antenna array 1200, and a processing module 1300. The first antenna array 1100 includes N first antennas 1110, and the second antenna array 1200 includes M second antennas 1210, where N is greater than M. The processing module 1300 includes a plurality of first processing units 1310, and each of N first antennas 1110 is connected to each first processing unit 1310 in a one-to-one correspondence. Each of M second antennas 1210 is in a differential connection to two different first processing units 1310. The first processing unit 1310 includes a power amplifier 1311. The processing module 1300 is configured to send a first signal to the first antenna 1310 by using one first processing unit 1310. The processing module 1300 is configured to send, through differential feeding, a second signal to the second antenna 1210 by using the two different first processing units 1310. An amplitude of the second signal is greater than an amplitude of the first signal. The first antenna array 1100 is configured to radiate a millimeter wave signal based on the first signal. The second antenna array 1200 is configured to radiate a millimeter wave signal based on the second signal.

It should be understood that the first antenna array 1100 and the second antenna array 1200 are usually perpendicular to each other. In other words, an included angle between the first antenna array 1100 and the second antenna array 1200 is 90°, or an included angle between the first antenna array 1100 and the second antenna array 1200 is within an angle range. For example, if the included angle between the first antenna array 1100 and the second antenna array 1200 is within a range of 75° to 115°, it is considered that the first antenna array 1100 and the second antenna array 1200 are perpendicular to each other, which is not limited in this embodiment of this application.

The millimeter wave module circuit provided in this embodiment of this application may further include a third antenna array and more antenna arrays, which is not limited in this embodiment of this application.

The first antenna array 1100 includes N first antennas 1110, and the second antenna array 1200 includes M second antennas 1210, where N is greater than M. In other words, a quantity of antennas in the first antenna array 1110 is greater than a quantity of antennas in the second antenna array 1200. It should be understood that as a quantity of antennas is increased, a gain of a corresponding antenna array is high. Because a quantity of antennas in the first antenna array 1110 is greater than a quantity of antennas in the second antenna array 1200, a gain of the first antenna array 1100 is greater than a gain of the second antenna array 1200.

An antenna in an antenna array is a patch antenna (patch antenna). That is, the first antenna 1110 and the second antenna 1210 are both patch antennas. The patch antenna is a pie-shaped directional antenna, and includes two metal plates (one is larger than the other) that are superimposed, with a sheet dielectric in the middle, which is appropriate for covering a single-story small office, a small shop, and another access point. The patch antenna generates a hemispherical covering surface. A propagation range from an installation point may be between 30° and 180°. In addition, each patch antenna supports two feeding modes: horizontal polarization and vertical polarization.

Each first antenna 1110 in the first antenna array 1100 is connected to one first processing unit 1310. Then a first signal input into the first antenna 1110 is obtained by amplifying an input signal by using a power amplifier 1311 in one first processing unit.

Each second antenna 1210 in the second antenna array 1200 is connected to two different first processing units 1310. Then a second signal input into the second antenna 1210 is obtained by amplifying input signals by power amplifiers 1311 in two first processing units 1310. By adjusting phases of two signals input into the second antenna 1210, an amplitude of the second signal may be increased. That is, the amplitude of the second signal is greater than an amplitude of the first signal.

One first processing unit is connected to each first antenna 1110, and two different first processing units 1310 are connected to each second antenna 1210. For example, when there are two second antennas 1210, two first processing units 1310 connected to one second antenna 1210 and two first processing units 1310 connected to another second antenna 1210 are not the same first processing unit 1310.

The first processing unit connected to the first antenna 1100 may be any one of two different first processing units connected to the second antenna 1210, or may not be any one of the two different first processing units connected to the second antenna 1210, which is not limited in this embodiment of this application.

Because the amplitude of the second signal input into the second antenna 1210 is greater than the amplitude of the first signal input into the first antenna 1110, a strength of a millimeter wave signal radiated by the second antenna array 1200 can be increased by increasing a strength of a signal input into the second antenna 1210 in the second antenna array 1200 when a gain of the second antenna array 1200 is less than a gain of the first antenna array 1100.

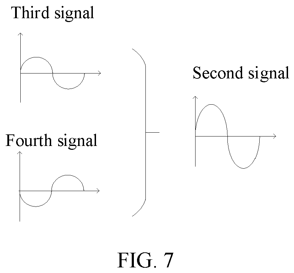

How to obtain the second signal is described in detail with reference to FIG. 6 and FIG. 7.

In the millimeter wave module circuit, working time periods of antennas in one antenna array are different. Therefore, the first processing unit 1310 usually includes a phase shifter 1312. The phase shifter 1312 is configured to adjust phases of signals input into antennas, so that the antennas can work in different time periods. In embodiments of this application, the phase shifters 1312 in the first processing units 1310 are used, to adjust phases of two signals input into the second antenna 1210, to increase a strength of the second signal.

Optionally, the first processing unit 1310 further includes a phase shifter 1312, and the phase shifter 1312 is configured to adjust a phase of an input signal received by the first processing unit 1310. The processing module 1300 is configured to obtain a third signal by using the phase shifter 1312 in a first target processing unit. The processing module 1300 is configured to obtain a fourth signal by using the phase shifter 1312 in a second target processing unit. A phase difference between the third signal and the fourth signal is a preset phase difference. The processing module 1300 is configured to obtain the second signal based on the third signal and the fourth signal. The first target processing unit means one of two first processing units connected to the second antenna 1210, and the second target processing unit means the other of the two first processing units connected to the second antenna 1210.

When the second antenna 1210 is connected to two first processing units 1310, one of the first processing units 1310 is the first target processing unit and the other of the first processing units 1310 is the second target processing unit.

For example, as shown in FIG. 6, one second antenna 1210 is connected to two first processing units 1310. An upper first processing unit 1310 is the first target processing unit, and a lower first processing unit 1310 is the second target processing unit.

The terminal device further includes a baseband module (not shown in the figure). The baseband module is configured to generate and send a baseband signal. It should be understood that the baseband module may be a baseband chip, for example, a modem (Modem). The baseband module sends the baseband signal to the first processing unit 1310 as an input signal of the first processing unit. For example, input signals input into the first target processing unit and the second target processing unit are shown in FIG. 6. A phase of an input signal is adjusted by the phase shifter 1312 in the first target processing unit, and an adjusted input signal arrives at an input end of the second antenna 1210 and is referred to as the third signal. It should be understood that a feeder connecting the first target processing unit and the second antenna 1210 is usually a microstrip line, and a length of the microstrip line usually changes a phase of a signal. In other words, the input signal passes through the first target processing unit and a feeder, to be changed into the third signal. A phase difference between the input signal and the third signal is determined by the phase shifter 1312 in the first target processing unit and a length of the feeder.

Similarly, a phase of an input signal is adjusted by the phase shifter 1312 in the second target processing unit, and an adjusted input signal arrives at an input end of the second antenna 1210 and is referred to as the fourth signal. A phase difference between the input signal and the fourth signal is determined by the phase shifter 1312 in the second target processing unit and a length of a feeder.

To determine a phase difference between the third signal and the fourth signal, generally, the length of the feeder between the first target processing unit and the second antenna 1210 is equal to the length of the feeder between the second target processing unit and the second antenna 1210. In this case, the phase difference between the third signal and the fourth signal may be determined by determining only a value of a phase of the input signal changed by the phase shifter 1312 in the first target processing unit and a value of a phase of the input signal changed by the phase shifter 1312 in the second target processing unit.

Optionally, the phase difference between the third signal and the fourth signal is a preset phase difference, and the preset phase difference is 180°.

For example, as shown in FIG. 7, when the phase difference between the third signal and the fourth signal is 180°, differential feeding is implemented on the second antenna. Because differential feeding is used for the third signal and the fourth signal and loaded on the second antenna simultaneously, an amplitude of a signal loaded on the second antenna is enhanced. A strength of the signal is similar to a strength of a second signal in FIG. 7.

In this embodiment of this application, the phase difference between the third signal and the fourth signal is 180°. Through differential feeding, the strength of the signal loaded on the second antenna is similar to the amplitude of the second signal, that is, a sum of an amplitude of the third signal and an amplitude of the fourth signal. In other words, the amplitude of the second signal is maximized, enabling the strength of the millimeter wave signal radiated by the second antenna array to be maximized, further improving the performance of the terminal device.

By using an enhanced second signal, the strength of the millimeter wave signal radiated by the second antenna array 1200 is also enhanced, increasing a coverage of the second antenna array 1200.

A millimeter wave module circuit provided in an embodiment of this application includes a first antenna array, a second antenna array, and a processing module. The first antenna array includes N first antennas, and the second antenna array includes M second antennas, where N is greater than M. The processing module includes a plurality of first processing units, and each of N first antennas is connected to each first processing unit. Each of M second antennas is separately connected to two different first processing units. The first processing unit includes a power amplifier. The processing module is configured to send a first signal to the first antenna by using the first processing unit. The processing module is configured to send, through differential feeding, a second signal to the second antenna by using two different first processing units. The first antenna array is configured to radiate a millimeter wave signal based on the first signal. The second antenna array is configured to radiate a millimeter wave signal based on the second signal. Because the quantity M of antennas in the second antenna array is less than the quantity N of antennas in the first antenna array, a gain of the second antenna array is less than a gain of the first antenna array. By reasonably adjusting phases of signals input by two different first processing units into the second antenna, a strength of the second signal input into the second antenna is greater than a strength of the first signal input into the first antenna. In other words, in the millimeter wave module circuit provided in this embodiment of this application, the gain of the second antenna array is compensated by increasing the strength of the second signal. This enables a strength of the millimeter wave signal radiated by the second antenna array to be increased. As the strength of millimeter wave signal radiated by the second antenna array is increased, a signal coverage of the second antenna array is increased, improving performance of a millimeter wave module in a coverage region of the second antenna array.

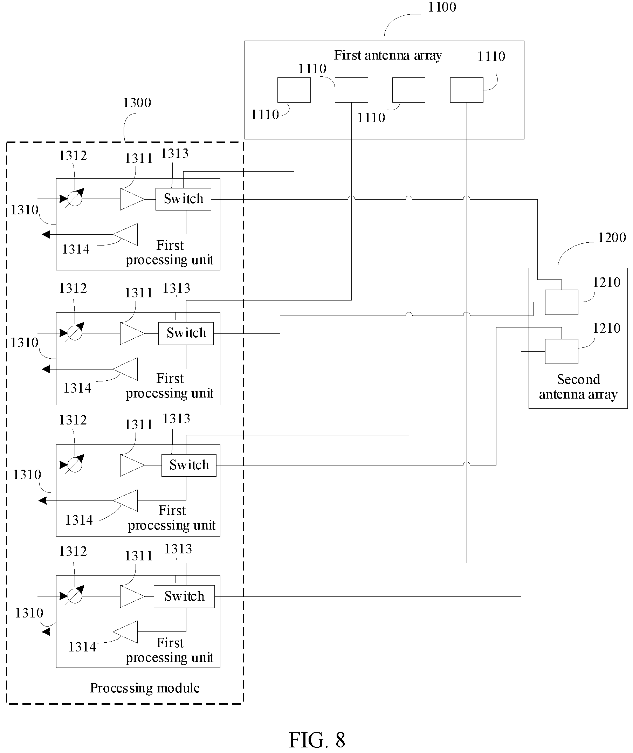

In a possible case, the first antenna and the second antenna may multiplex one first processing unit. In this way, a quantity of the first processing units may be reduced, and space occupied by the millimeter wave module circuit in the terminal device may be further reduced. Details are described below with reference to embodiments shown in FIG. 8 to FIG. 10.

FIG. 8 is a schematic diagram of a structure of a millimeter wave module circuit according to another embodiment of this application. As shown in FIG. 8, the millimeter wave module circuit includes a first antenna array 1100, a second antenna array 1200, and a processing module 1300. The first antenna array 1100 includes N first antennas 1110, and the second antenna array 1200 includes M second antennas 1210, where N is greater than M. The processing module 1300 includes a plurality of first processing units 1310. Each of N first antenna 1110 of N first antennas is connected to each first processing unit. Each of M second antennas is in a differential connection to two different first processing units. A first processing unit connected to the first antenna is any one of two different first processing units connected to the second antenna. The first processing unit 1310 includes a power amplifier 1311, a phase shifter 1312, a switch 1313, and a low noise amplifier 1314. When the switch 1313 is in a first switch-on state, the processing module 1300 is configured to send a first signal to the first antenna 1110 in a first time period and transmit a signal received by the second antenna 1210 to the low noise amplifier 1314. When the switch 1313 is in a second switch-on state, the processing module 1300 is configured to send a second signal to the second antenna 1210 in a second time period through differential feeding, and transmit a signal received by the first antenna 1110 to the low noise amplifier 1314. An amplitude of the second signal is greater than an amplitude of the first signal. The first antenna array 1100 is configured to radiate a millimeter wave signal based on the first signal. The second antenna array 1200 is configured to radiate a millimeter wave signal based on the second signal.

A first processing unit connected to the first antenna 1110 may be any one of the two different first processing units connected to the second antenna 1210, that is, one first processing unit 1310 is to be multiplexed by the first antenna 1110 and the second antenna 1210. In the millimeter wave module circuit, different antenna arrays have different working time periods. Therefore, the processing module 1300 sends the first signal to the first antenna 1110 in the first antenna array 1100 in the first time period and sends the second signal to the second antenna 1210 in the second antenna array 1200 in the second time period. This enables a same first processing unit 1310 to be multiplexed between the first antenna 1110 and the second antenna 1210.

A millimeter wave module circuit in an embodiment of this application includes a first antenna array, a second antenna array, and a processing module. The first antenna array includes N first antennas, and the second antenna array includes M second antennas, where N is greater than M. The processing module includes a plurality of first processing units. Each of N first antennas is connected to each first processing unit. Each of M second antennas is separately connected to two different first processing units. A first processing unit connected to the first antenna is any one of two first processing units connected to the second antenna, and the first processing unit includes the power amplifier. The processing module is configured to send, by using one first processing unit, a first signal to the first antenna in a first time period. The processing module is configured to send, by using two first processing units, a second signal to the second antenna in a second time period. An amplitude of the second signal is greater than an amplitude of the first signal. The first antenna array is configured to radiate a millimeter wave signal based on the first signal. The second antenna array is configured to radiate a millimeter wave signal based on the second signal. Equivalently, the first antenna and the second antenna in this embodiment of this application multiplex one first processing unit, reducing a quantity of the first processing units in the millimeter wave module circuit and saving space on the terminal device.

In a possible case, the first processing unit 1310 includes a power amplifier 1311, a phase shifter 1312, a switch 1313, and a low noise amplifier 1314.

The power amplifier 1311 is configured to amplify a baseband signal whose phase is adjusted by the phase shifter 1312.

The switch 1313 may be a double-pole double throw switch (double-pole double throw switch, DPDT), and usually includes four ports, namely, a port 1, a port 2, a port 3, and a port 4.

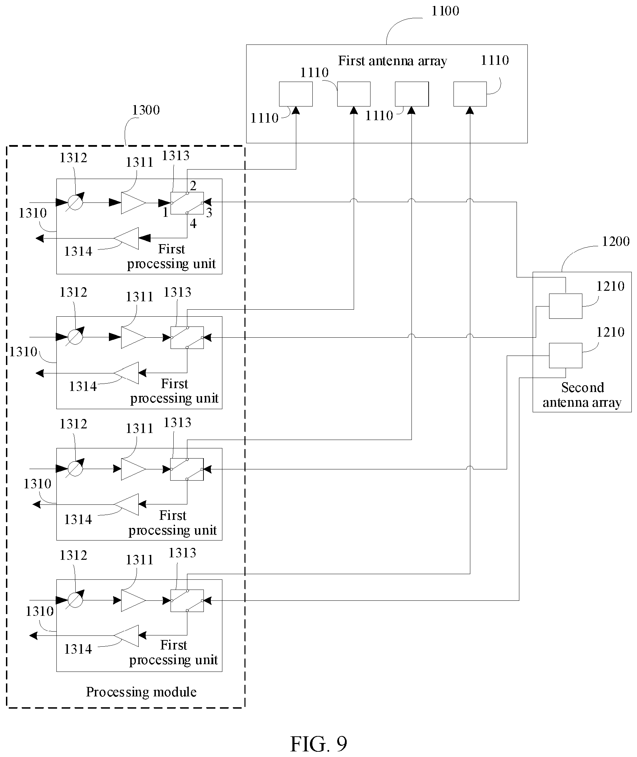

When the switch 1313 is in a first switch-on state, for example, as shown in FIG. 9, the port 1 and port 2 are turned off, and the port 3 and port 4 are turned off. In this case, a phase of the baseband signal is adjusted by the phase shifter 1312, and the baseband signal is amplified by the power amplifier 1311, and then emitted from the first antenna 1110 through the port 1 and the port 2 of the switch 1313. This enables the first antenna array 1100 to radiate the millimeter wave signal. Meanwhile, a signal received by the second antenna 1210 is input into the low noise amplifier 1314 through the port 3 and the port 4, and the received signal is processed by the low noise amplifier 1314 and input into a baseband module (not shown in the figure) for further processing.

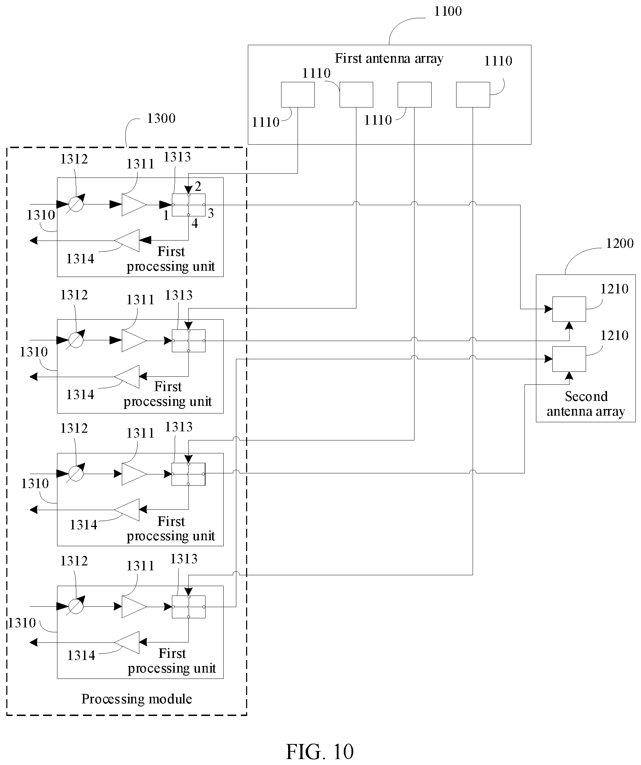

When the switch 1313 is in a second switch-on state, for example, as shown in FIG. 10, the port 1 and port 3 are turned off, and the port 2 and port 4 are turned off. In this case, a phase of the baseband signal is adjusted by the phase shifter 1312, and the baseband signal is amplified by the power amplifier 1311 and then emitted from the second antenna 1210 through the port 1 and the port 3 of the switch 1313. This enables the second antenna array 1200 to radiate the millimeter wave signal. Meanwhile, a signal received by the first antenna 1110 is input into the low noise amplifier 1314 through the port 2 and the port 4, and the received signal is processed by the low noise amplifier 1314 and input into a baseband module (not shown in the figure) for further processing.

In this embodiment of this application, when the switch is in the first switch-on state, the processing module is configured to send the first signal to the first antenna and transmit the signal received by the second antenna to the low noise amplifier. When the switch is in the second switch-on state, the processing module is configured to send the second signal to the second antenna and transmit a signal received by the first antenna to the low noise amplifier. Therefore, when the first antenna and the second antenna multiplex one first processing unit, the second antenna array can receive a signal through different switch-on states of the switch when the first antenna array radiates the millimeter wave signal. When the second antenna array radiates the millimeter wave signal, the first antenna array receives a signal, preventing, when the first antenna array radiates the millimeter wave signal, that the second antenna array is to receive a signal through a same signal channel, or preventing, when the second antenna array radiates the millimeter wave signal, that the second antenna array is to receive a signal through a same signal channel, further preventing a signal conflict caused by receiving of a signal and radiation of the millimeter wave signal through the same signal channel.

A manner in which the first antenna 1110 and one first processing unit are connected and a manner in which the second antenna 1210 and two first processing units are connected are described in detail below.

It may be known from the foregoing description that one first processing unit connected to the first antenna 1110 may be any one of the first processing units connected to the second antenna 1210. It should be understood that the following examples may be included.

### Example 1

One first processing unit connected to each first antenna 1110 in the first antenna array 1100 is any one of two first processing units, that is, each first antenna 1110 and a second antenna 1210 multiplex one first processing unit.

In Example 1, when a quantity N of the first antennas 1110 is greater than 2*M, a quantity of a plurality of first processing units is N. When the quantity N of the first antennas 1110 is less than 2*M, the quantity of the plurality of first processing units is 2*M.

### Example 2

One first processing unit 1310 connected to one or more first antennas 1110 in the first antenna array 1100 is any one of two first processing units 1310 connected to a second antenna 1210, that is, some first antennas 1110 in the first antenna array 1100 and the second antenna 1210 multiplex one first processing units 1310.

In Example 2, when a quantity N of the first antennas 1110 is greater than 2*M, a quantity of a plurality of first processing units is greater than N. When the quantity N of the first antennas 1110 is less than 2*M, the quantity of the plurality of first processing units is greater than 2*M.

### Example 3

A second antenna 1210 is connected to two first processing units. One first processing unit connected to each first antenna 1110 in the first antenna array 1100 is any one of two first processing units connected to one second antenna 1210, that is, each first antenna 1110 and the second antenna 1210 multiplex one first processing unit.

In Example 3, when a quantity of the first antennas 1110 is N=2*M, in other words, the quantity of the first antennas 1110 is twice a quantity of the second antennas 1210, a quantity of a plurality of first processing units is N or 2*M.

For example, if the quantity of the first antennas 1110 is 4 and the quantity of the second antennas 1210 is 2, the quantity of the first processing units in the processing module is 4.

In this embodiment of this application, the quantity of the first antennas is twice the quantity of the second antennas, and a second antenna is connected to two first processing units. The quantity of the plurality of first processing units is N, and is equal to 2*M. That is, the millimeter wave module circuit in this embodiment of this application may be implemented by a least quantity of the first processing units, further saving the space on the terminal device.

### Example 4

A second antenna 1210 is connected to two first processing units 1310. One first processing unit 1310 connected to one or more first antennas 1110 in the first antenna array 1100 is any one of two first processing units 1310 connected to the second antenna 1210, that is, some first antennas 1110 and the second antenna 1210 multiplex one first processing unit.

In Example 4, when a quantity N of the first antennas 1110 is greater than 2*M, a quantity of a plurality of first processing units is N. When the quantity N of the first antennas 1110 is less than 2*M, the quantity of the plurality of first processing units is 2*M.

In an embodiment, an electronic device is provided. The electronic device may be a terminal device, and includes the millimeter wave module circuit in the embodiment shown in any one of the foregoing FIG. 2 to FIG. 10.

A type of the electronic device is not limited in this embodiment of this application. For example, the electronic device may be, but is not limited to a mobile phone, a tablet computer, a smart speaker, a smart big screen (also known as a mart TV), a wearable device, or the like.

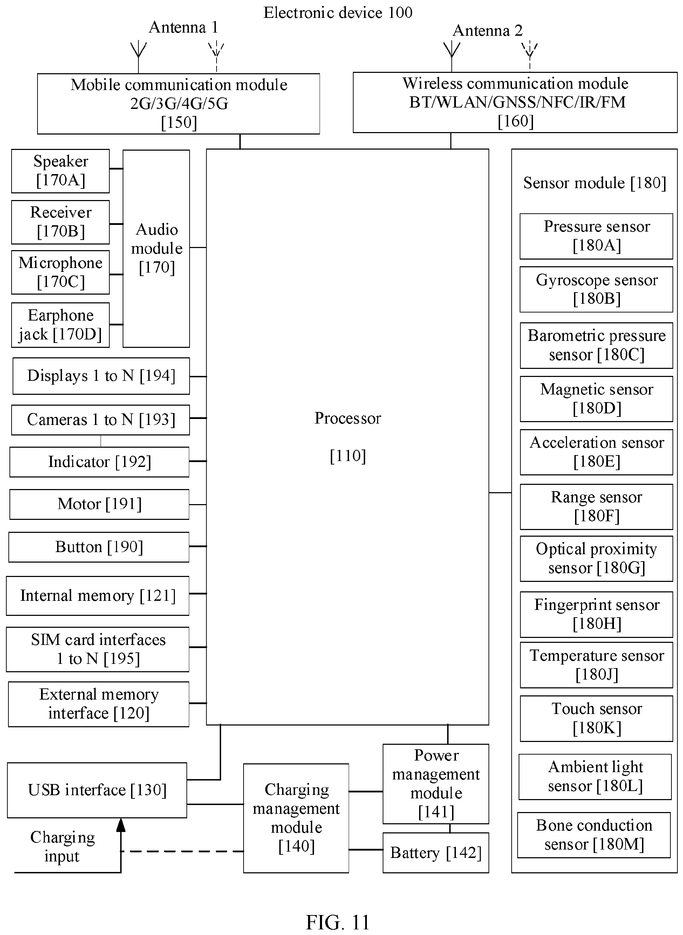

For example, FIG. 11 shows a schematic diagram of a structure of an electronic device 100. The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a range sensor 180F, an optical proximity sensor 180G, a fingerprint sensor 180H, a temperature sensor 180J, a touch sensor 180K, an ambient optical sensor 180L, a bone conduction sensor 180M, and the like.

It may be understood that a structure shown in this embodiment of this application does not constitute a specific limitation on the electronic device 100. In some other embodiments of this application, the electronic device 100 may include more or fewer components than those shown in the figure, or combine some components, or split some components, or have a different component arrangement. The components shown in the figure may be implemented in hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

It may be understood that an interface connection relationship between modules illustrated in this embodiment of this application is merely an illustrative description, and does not constitute a limitation on the structure of the electronic device 100. In some other embodiments of this application, the electronic device 100 may alternatively use an interface connection manner different from that in the foregoing embodiment, or use a combination of a plurality of interface connection manners.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further multiplexed to increase an antenna utilization rate. For example, the antenna 1 may be multiplexed as a diversity antenna in a wireless local area network. In some other embodiments, the antenna may be used in combination with a tuning switch.

The mobile communication module 150 may provide a solution applied to the electronic device 100 for wireless communication such as 2G/3G/4G/5G. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert, through the antenna 1, the amplified signal into an electromagnetic wave for radiation. In some embodiments, at least some functional modules in the mobile communication module 150 may be disposed in the processor 110. In some embodiments, at least some functional modules of the mobile communication module 150 and at least some modules of the processor 110 may be disposed in a same component.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then the demodulator transmits the low-frequency baseband signal obtained by demodulation to the baseband processor for processing. The low-frequency baseband signal is processed by the baseband processor and then transmitted to the application processor. The application processor outputs a sound signal by an audio device (which is not limited to the speaker 170A, the receiver 170B, or the like), or displays an image or a video by the display 194. In some embodiments, the modem processor may be an independent component. In some other embodiments, the modem processor may be independent of the processor 110, and is disposed in a same component as the mobile communication module 150 or another functional module.

The wireless communication module 160 may provide a wireless communication solution that is applied to the electronic device 100, and that includes a wireless local area network (wireless local area networks, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processing module. The wireless communication module 160 receives an electromagnetic wave through the antenna 2, performs frequency modulation and filtering processing on the electromagnetic wave signal, and sends a processed signal to the processor 110. The wireless communication module 160 may further receive a to-be-sent signal from the processor 110, perform frequency modulation and amplification on the signal, and convert, through the antenna 2, an amplified signal with a frequency modulated into an electromagnetic wave for radiation.

In some embodiments, the antenna 1 and the mobile communication module 150 in the electronic device 100 are coupled, and the antenna 2 and the wireless communication module 160 are coupled, so that the electronic device 100 can communicate with a network and another device by using a wireless communication technology. The wireless communication technology may include a global system for mobile communication (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), a fifth generation (the 5th Generation of wireless communication system, 5G) communication system, BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

It should be noted that any electronic device mentioned in embodiments of this application may include more or less modules in the electronic device 100.

For example, when the terminal device is a mobile phone, one side of a body of the terminal device is a display and the other side is a backplate, and the display and the backplate are connected through a middle frame, and the display, the backplate, and the middle frame form an accommodating cavity. Two or more antenna arrays, such as a first antenna array and a second antenna array, are disposed in the accommodating cavity of the mobile phone.

The first antenna array is disposed in a plane in which the backplate is located, and the second antenna array is disposed in any plane in which the middle frame is located. Alternatively, the first antenna array and the second antenna array are respectively disposed in two different planes in which the middle frame is located.

Alternatively, if a third antenna array is further included, a plane in which the third antenna array is disposed is different from the plane in which the first antenna array is disposed and the plane in which the second antenna array is disposed.

For example, a millimeter wave module circuit includes an antenna array 1#, an antenna array 2#, and an antenna array 3#, and positions of the antenna arrays be disposed freely. In addition, positions of the three (or more) antenna arrays may be set on a plane in which an X axis (including +/-X axis) of the terminal device is located, a plane in which a Y axis of the terminal device is located, or a plane in which a Z axis of the terminal device is located. The Z axis is perpendicular to a home screen, and linear array arrangement directions of the module 1#, the module 2#, and the module 3# are parallel. Specifically, arrangement modes may be as follows.

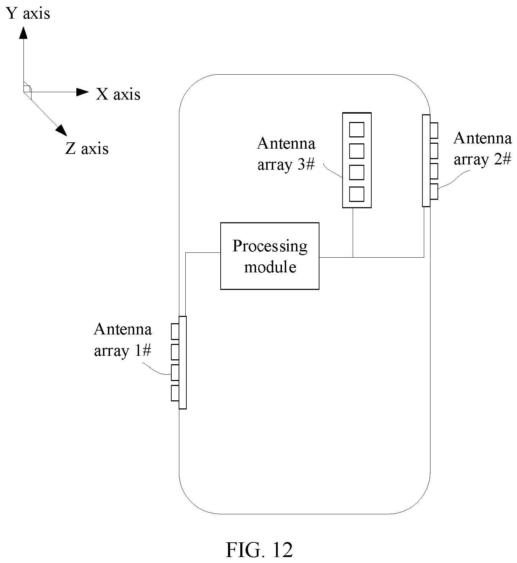

For example, as shown in FIG. 12, the antenna array 1# is disposed on a middle frame of on a left side of a mobile phone, that is, in a plane in which the +X axis, is located and a millimeter wave beam emitted by the module 1# radiates to a left side of the mobile phone terminal. The antenna array 2# is disposed on a middle frame on a right side of the mobile phone, corresponding to a plane in which the -X axis is located, and emits a millimeter wave beam to a right side of the mobile phone terminal. The antenna array 3# is disposed in the accommodating cavity, and is located in a plane in which a back of the mobile phone is located, that is, on a plane corresponding to the Z axis, and a millimeter wave beam is to be radiated to the back of the mobile phone terminal.

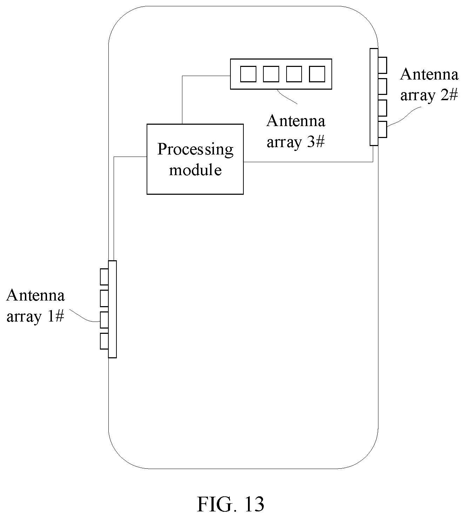

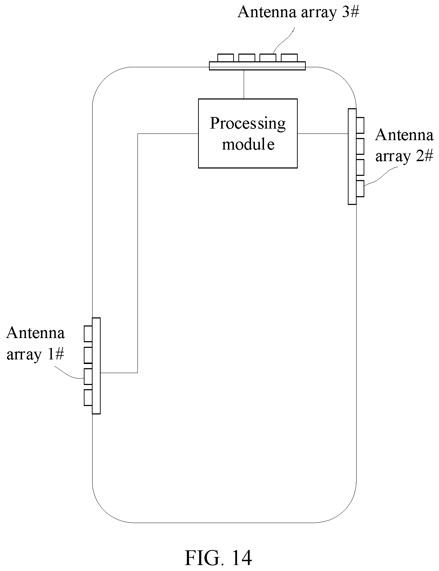

For another example, positions of the antenna array 1# and the antenna array 2# are kept unchanged, and only a position of the antenna array 3# is changed. As shown in FIG. 13, the position of the antenna array 3# is changed from a vertical direction to a horizontal direction. Alternatively, as shown in FIG. 14, the antenna array 3# is disposed on the other side of a middle frame of the mobile phone, such as a side surface at the top of the middle frame of the mobile phone, and is corresponding to a plane of the Y axis.

It should be understood that in this embodiment, the antenna array 3# may be alternatively disposed at another position of the mobile phone, and the position of the antenna array 3# is not limited in this embodiment. In addition, the positions of the antenna array 1# and the antenna array 2# and positions of more antenna arrays may also be disposed freely. In this embodiment, specific positions of antenna arrays of a plurality of antenna arrays are not limited, as long as different antenna arrays are disposed on different planes in which the terminal device is located and the positions of antenna arrays are perpendicular to each other.

In the foregoing embodiments, the descriptions of various embodiments have respective focuses. For a part that is not described or recorded in detail in an embodiment, reference may be made to related descriptions in other embodiments. It should be understood that sequence numbers of the steps do not mean an execution sequence in the foregoing embodiments. The execution sequence of the processes should be determined based on functions and internal logic of the processes, and should not constitute any limitation on the implementation processes of embodiments of this application. In addition, in the descriptions of the specification and claims of this application, the terms "first", "second", "third", and the like are merely intended for a purpose of differentiated description, but shall not be understood as an indication or an implication of relative importance. Reference to "an embodiment", "some embodiments", or the like described in the specification of this application means that specific features, structures, or characteristics described with reference to the embodiment are included in one or more embodiments of this application. Therefore, the phrases "in an embodiment," "in some embodiments," "in some other embodiments," "in another embodiment," and the like appearing in various places in this specification do not necessarily mean same embodiments, but mean "one or more but not all of embodiments" unless specifically emphasized otherwise.

## Claims

1. A millimeter wave module circuit, wherein the millimeter wave module circuit comprises a first antenna array (1100), a second antenna array (1200), and a processing module (1300), wherein the first antenna array (1100) comprises N first antennas (1110), and the second antenna array (1200) comprises M second antennas (1210), wherein N is greater than M, wherein
the processing module (1300) comprises a plurality of first processing units (1310), each of N first antennas (1110) is connected to each first processing unit (1310) in a one-to-one correspondence, each of M second antennas (1210) is in a differential connection to two different first processing units (1310), and each of the plurality of first processing units (1310) comprises a power amplifier (1311);
the processing module (1300) is configured to send a first signal to one of the N first antennas by using one of the plurality of first processing units (1310);
the processing module (1300) is configured to send, through differential feeding, a second signal to one of the M second antennas (1210) by using two different first processing units (1310) of the plurality of first processing units (1310);
the first antenna array (1100) is configured to radiate a millimeter wave signal based on the first signal; and
the second antenna array (1200) is configured to radiate a millimeter wave signal based on the second signal.

2. The millimeter wave module circuit according to claim 1, wherein each of the plurality of first processing units (1310) further comprises a phase shifter (1312), and the phase shifter (1312) is configured to adjust a phase of an input signal received by the respective first processing unit (1310);
the processing module (1300) is configured to obtain a third signal by using the phase shifter (1312) in a first target processing unit;
the processing module (1300) is configured to obtain a fourth signal by using the phase shifter (1312) in a second target processing unit, and a phase difference between the third signal and the fourth signal is 180°; and
the second signal is a differential signal obtained by combining the third signal and the fourth signal,
wherein the first target processing unit is one of the two different first processing units (1310), and the second target processing unit is the other of the two different first processing units (1310).

3. The millimeter wave module circuit according to any one of claim 1 or 2, wherein one of the plurality of first processing units (1310), which is connected to one of the N first antennas (1110), is one of the two different first processing units (1310).

4. The millimeter wave module circuit according to claim 3, wherein the processing module (1300) is configured to send the first signal to the one of the N first antennas (1110) in a first time period and send the second signal to the one of the M second antenna (1210) in a second time period.

5. The millimeter wave module circuit according to claim 4, wherein each of the plurality of first processing units (1310) further comprises a switch (1313) and a low noise amplifier (1314);
when the switch (1313) is in a first switch-on state, the processing module (1300) is configured to send the first signal to the one of the N first antennas (1110) and transmit a signal received by the one of the M second antennas (1210) to the low noise amplifier (1314); and
when the switch (1313) is in a second switch-on state, the processing module (1300) is configured to send the second signal to the one of the M second antennas (1210) and transmit a signal received by the one of the N first antennas (1110) to the low noise amplifier (1314).

6. The millimeter wave module circuit according to claim 5, wherein the switch (1313) is a double-pole double throw switch, and the power amplifier (1311) is separately connected to a phase shifter (1312) and the double-pole double throw switch;
when the switch (1313) is in the first switch-on state, the power amplifier (1311) is connected to the one of the N first antennas (1110) through the double-pole double throw switch, and the low noise amplifier (1314) is connected to the one of the M second antennas (1210) through the switch (1313); and
when the switch (1313) is in the second switch-on state, the power amplifier (1311) is connected to the one of the M second antennas (1210) through the double-pole double throw switch, and the low noise amplifier (1314) is connected to the one of the N first antennas (1110) through the switch (1313).

7. The millimeter wave module circuit according to claim 6, wherein a quantity of the plurality of first processing units (1310) is equal to N and greater than or equal to 2*M.

8. A terminal device, wherein the terminal device comprises a body, one side of the host is a display (194), and the other side is a backplate, and the display (194) and the backplate are connected through a middle frame; and
the display (194), the backplate, and the middle frame form an accommodating cavity, and a
millimeter wave module circuit according to any one of claims 1 to 7 is disposed in the accommodating cavity.

9. The terminal device according to claim 8, wherein
the first antenna array (1100) is disposed in a plane in which the backplate is located, and the second antenna array (1200) is disposed in any plane in which the middle frame is located; or
the first antenna array (1100) and the second antenna array (1200) are respectively disposed in two different planes in which the middle frame is located.

## Patentansprüche

1. Millimeterwellen-Modulschaltung, wobei die Millimeterwellen-Modulschaltung ein erstes Antennenarray (1100), ein zweites Antennenarray (1200) und ein Verarbeitungsmodul (1300) umfasst, wobei das erste Antennenarray (1100) N erste Antennen (1110) umfasst und das zweite Antennenarray (1200) M zweite Antennen (1210) umfasst, wobei N größer als M ist, wobei das Verarbeitungsmodul (1300) eine Vielzahl von ersten Verarbeitungseinheiten (1310) umfasst, wobei jede der N ersten Antennen (1110) jeweils einer ersten Verarbeitungseinheit (1310) eindeutig zugeordnet ist, wobei jede der M zweiten Antennen (1210) differenziell mit zwei verschiedenen ersten Verarbeitungseinheiten (1310) verbunden ist und wobei jede der mehreren ersten Verarbeitungseinheiten (1310) einen Leistungsverstärker (1311) umfasst;
das Verarbeitungsmodul (1300) ist konfiguriert, ein erstes Signal über eine der N ersten Antennen mittels einer der mehreren ersten Verarbeitungseinheiten (1310) zu senden;
das Verarbeitungsmodul (1300) ist dazu eingerichtet, mittels Differenz-Speisung ein zweites Signal über eine der M zweiten Antennen (1210) unter Verwendung von zwei verschiedenen ersten Verarbeitungseinheiten (1310) der mehreren ersten Verarbeitungseinheiten (1310) zu senden;
das erste Antennenarray (1100) ist dazu eingerichtet, ein Millimeterwellensignal basierend auf dem ersten Signal zu abstrahlen; und
das zweite Antennenarray (1200) ist dazu eingerichtet, ein Millimeterwellensignal basierend auf dem zweiten Signal zu abstrahlen.

2. Millimeterwellen-Modulschaltung nach Anspruch 1, wobei jede der mehreren ersten Verarbeitungseinheiten (1310) darüber hinaus einen Phasenschieber (1312) umfasst und wobei der Phasenschieber (1312) dazu konfiguriert ist, die Phase eines von der jeweiligen ersten Verarbeitungseinheit (1310) empfangenen Eingangssignals zu verändern;
das Verarbeitungsmodul (1300) ist dazu eingerichtet, mit Hilfe des Phasenschiebers (1312) in einer ersten Zielverarbeitungseinheit ein drittes Signal zu gewinnen;
das Verarbeitungsmodul (1300) ist dazu eingerichtet, mit Hilfe des Phasenschiebers (1312) in einer zweiten Zielverarbeitungseinheit ein viertes Signal zu erhalten, wobei die Phasendifferenz zwischen dem dritten Signal und dem vierten Signal 180° beträgt; und
das zweite Signal ist ein Differenzsignal, das durch die Kombination des dritten Signals und des vierten Signals gewonnen wird,
wobei die erste Zielverarbeitungseinheit eine der zwei verschiedenen ersten Verarbeitungseinheiten (1310) ist und die zweite Zielverarbeitungseinheit die andere der zwei verschiedenen ersten Verarbeitungseinheiten (1310) ist.

3. Millimeterwellen-Modulschaltung nach einem der Ansprüche 1 oder 2, wobei eine der mehreren ersten Verarbeitungseinheiten (1310), die mit einer der N ersten Antennen (1110) verbunden ist, eine der zwei verschiedenen ersten Verarbeitungseinheiten (1310) ist.

4. Millimeterwellen-Modulschaltung nach Anspruch 3, wobei das Verarbeitungsmodul (1300) dazu konfiguriert ist, das erste Signal in einer ersten Zeitperiode an eine der N ersten Antennen (1110) zu senden und das zweite Signal in einer zweiten Zeitperiode an eine der M zweiten Antennen (1210) zu senden.

5. Millimeterwellen-Modulschaltung nach Anspruch 4, wobei jede der mehreren ersten Verarbeitungseinheiten (1310) ferner einen Schalter (1313) und einen rauscharmen Verstärker (1314) umfasst;
wenn sich der Schalter (1313) in einem ersten Einschaltzustand befindet, ist das Verarbeitungsmodul (1300) dazu konfiguriert, das erste Signal an eine der N ersten Antennen (1110) zu senden und ein von einer der M zweiten Antennen (1210) empfangenes Signal an den rauscharmen Verstärker (1314) zu übertragen; und
wenn sich der Schalter (1313) in einem zweiten Einschaltzustand befindet, ist das Verarbeitungsmodul (1300) dazu konfiguriert, das zweite Signal an eine der M zweiten Antennen (1210) zu senden und ein von einer der N ersten Antennen (1110) empfangenes Signal an den rauscharmen Verstärker (1314) zu übertragen.

6. Millimeterwellen-Modulschaltung nach Anspruch 5, wobei der Schalter (1313) ein Doppel-Umschalter (double-pole double throw switch) ist und der Leistungsverstärker (1311) getrennt mit einem Phasenschieber (1312) und dem Doppel-Umschalter verbunden ist;
wenn sich der Schalter (1313) im ersten Einschaltzustand befindet, ist der Leistungsverstärker (1311) über den Doppel-Umschalter mit einer der N ersten Antennen (1110) verbunden, und der rauscharme Verstärker (1314) ist über den Schalter (1313) mit einer der M zweiten Antennen (1210) verbunden; und
wenn sich der Schalter (1313) im zweiten Einschaltzustand befindet, ist der Leistungsverstärker (1311) über den Doppel-Umschalter mit einer der M zweiten Antennen (1210) verbunden, und der rauscharme Verstärker (1314) ist über den Schalter (1313) mit einer der N ersten Antennen (1110) verbunden.

7. Millimeterwellen-Modulschaltung nach Anspruch 6, wobei die Anzahl der mehreren ersten Verarbeitungseinheiten (1310) N beträgt und größer oder gleich 2*M ist.

8. Endgerät, wobei das Endgerät ein Gehäuse umfasst, wobei eine Seite des Hosts ein Display (194) ist und die andere Seite eine Rückwand ist, und das Display (194) und die Rückwand durch einen Mittelrahmen verbunden sind; und
das Display (194), die Rückwand und der Mittelrahmen bilden einen Aufnahmeraum, und eine Millimeterwellen-Modulschaltung nach einem der Ansprüche 1 bis 7 ist im Aufnahmeraum angeordnet.

9. Endgerät nach Anspruch 8, wobei
Das erste Antennenarray (1100) ist in einer Ebene angeordnet, in der sich die Rückwand befindet, und das zweite Antennenarray (1200) ist in einer beliebigen Ebene angeordnet, in der sich der Mittelrahmen befindet; oder
Das erste Antennenarray (1100) und das zweite Antennenarray (1200) sind jeweils in zwei unterschiedlichen Ebenen angeordnet, in denen sich der Mittelrahmen befindet.

## Revendications

1. Circuit de module à ondes millimétriques, ledit circuit comprenant un premier réseau d'antennes (1100), un second réseau d'antennes (1200) et un module de traitement (1300), le premier réseau d'antennes (1100) comprenant N premières antennes (1110), et le second réseau d'antennes (1200) comprenant M secondes antennes (1210), N étant supérieur à M. Le module de traitement (1300) comprend une pluralité de premières unités de traitement (1310), chacune des N premières antennes (1110) étant connectée à une unité de traitement (1310) selon une correspondance un-à-un, chacune des M secondes antennes (1210) étant connectée de manière différentielle à deux unités de traitement (1310) différentes, et chacune desdites premières unités de traitement (1310) comprenant un amplificateur de puissance (1311) ;
le module de traitement (1300) est configuré pour envoyer un premier signal à l'une des N premières antennes en utilisant l'une desdites premières unités de traitement (1310) ;
le module de traitement (1300) est configuré pour envoyer, par alimentation différentielle, un second signal à l'une des M secondes antennes (1210) en utilisant deux unités de traitement (1310) différentes parmi lesdites premières unités de traitement (1310) ;
le premier réseau d'antennes (1100) est conçu pour rayonner un signal à ondes millimétriques en fonction du premier signal ; et
le second réseau d'antennes (1200) est conçu pour rayonner un signal à ondes millimétriques en fonction du second signal.

2. Circuit de module à ondes millimétriques selon la revendication 1, dans lequel chacune desdites premières unités de traitement (1310) comprend en outre un déphaseur (1312), et le déphaseur (1312) est configuré pour ajuster la phase d'un signal d'entrée reçu par l'unité de traitement concernée (1310) ;
le module de traitement (1300) est configuré pour obtenir un troisième signal à l'aide du déphaseur (1312) dans une première unité cible de traitement;
le module de traitement (1300) est configuré pour obtenir un quatrième signal à l'aide du déphaseur (1312) dans une seconde unité cible de traitement, et la différence de phase entre le troisième signal et le quatrième signal est de 180° ; et
le second signal est un signal différentiel obtenu en combinant le troisième signal et le quatrième signal,
la première unité cible de traitement étant l'une des deux premières unités de traitement (1310) différentes, et la seconde unité cible de traitement étant l'autre des deux premières unités de traitement (1310) différentes.

3. Circuit de module à ondes millimétriques selon l'une quelconque des revendications 1 ou 2, dans lequel l'une desdites premières unités de traitement (1310), qui est connectée à l'une des N premières antennes (1110), est l'une des deux premières unités de traitement (1310) différentes.

4. Le circuit de module d'ondes millimétriques selon la revendication 3, dans lequel le module de traitement (1300) est configuré pour envoyer le premier signal à l'une des N premières antennes (1110) pendant une première période de temps et envoyer le second signal à l'une des M secondes antennes (1210) pendant une seconde période de temps.

5. Le circuit de module d'ondes millimétriques selon la revendication 4, dans lequel chacune des unités de traitement premières (1310) comprend en outre un commutateur (1313) et un amplificateur à faible bruit (1314) ;
lorsque le commutateur (1313) est dans un premier état de connexion, le module de traitement (1300) est configuré pour envoyer le premier signal à l'une des N premières antennes (1110) et transmettre un signal reçu par l'une des M secondes antennes (1210) à l'amplificateur à faible bruit (1314) ; et
lorsque le commutateur (1313) est dans un second état de connexion, le module de traitement (1300) est configuré pour envoyer le second signal à l'une des M secondes antennes (1210) et transmettre un signal reçu par l'une des N premières antennes (1110) à l'amplificateur à faible bruit (1314).

6. Le circuit de module d'ondes millimétriques selon la revendication 5, dans lequel le commutateur (1313) est un commutateur à double circuit double position, et l'amplificateur de puissance (1311) est connecté séparément à un déphaseur (1312) et au commutateur à double circuit double position ;
lorsque le commutateur (1313) est dans le premier état de connexion, l'amplificateur de puissance (1311) est connecté à l'une des N premières antennes (1110) via le commutateur à double circuit double position, et l'amplificateur à faible bruit (1314) est connecté à l'une des M secondes antennes (1210) via le commutateur (1313) ; et
lorsque le commutateur (1313) est dans le second état de connexion, l'amplificateur de puissance (1311) est connecté à l'une des M secondes antennes (1210) via le commutateur à double circuit double position, et l'amplificateur à faible bruit (1314) est connecté à l'une des N premières antennes (1110) via le commutateur (1313).

7. Le circuit de module d'ondes millimétriques selon la revendication 6, dans lequel la quantité des unités de traitement premières (1310) est égale à N et supérieure ou égale à 2*M.

8. Un dispositif terminal, dans lequel le dispositif terminal comprend un corps, un côté de l'hôte est un écran (194), et l'autre côté est une plaque arrière, l'écran (194) et la plaque arrière étant reliés par un cadre central ; et
l'écran (194), la plaque arrière et le cadre central forment une cavité de logement, et un circuit de module d'ondes millimétriques selon l'une quelconque des revendications 1 à 7 est disposé dans la cavité de logement.

9. Le dispositif terminal selon la revendication 8, dans lequel
le premier réseau d'antennes (1100) est disposé dans un plan dans lequel se trouve la plaque arrière, et le second réseau d'antennes (1200) est disposé dans n'importe quel plan dans lequel se trouve le cadre intermédiaire ; ou
le premier réseau d'antennes (1100) et le second réseau d'antennes (1200) sont respectivement disposés dans deux plans différents dans lesquels se trouve le cadre intermédiaire.
